(19) Europäisches Patentamt
European Patent Office
Office européen des brevets

(11) Publication number: 0 113 492
A1

(12) EUROPEAN PATENT APPLICATION

(21) Application number: 83300099.5

(22) Date of filing: 07.01.83

(51) Int. Cl.$^3$: C 08 L 95/00
C 08 K 5/34

(43) Date of publication of application:
18.07.84 Bulletin 84/29

(84) Designated Contracting States:
AT BE CH DE FR GB IT LI LU NL SE

(71) Applicant: AKZO N.V.
Velperweg 76
NL-6824 BM Arnhem(NL)

(72) Inventor: Ogden, Paul Henry
10 Waterloo Road
Southport(GB)

(72) Inventor: James, Alan Duncan
14 Linnell Drive
Rochdale, OL11 5QP(GB)

(74) Representative: Sieders, René et al,
P.O. Box 314
NL-6800 AH Arnhem(NL)

(54) **Adhesion aids for bitumen and road oil.**

(57) Improved adhesion aids for bitumen and road oil are disclosed which comprise amide derivatives of N-aminoethyl piperazine and aliphatic carboxylic acids having 8 to 22 carbon atoms. Preferred acids are tallow, stearic and oleic acids.

EP 0 113 492 A1

Adhesion aids for bitumen and road oil

The invention is concerned with adhesion aids for bitumen and road oil comprising compounds which are amide derivatives of N-aminoethyl piperazine of the general formula

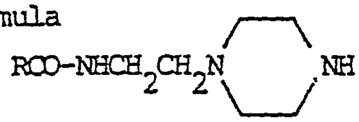

Compounds of this type have been previously proposed for the purpose in the published patent application NL 7 701 955. An exclusive feature of these known compounds is that R contains an aromatic or cycloaliphatic group. Compounds in this category that are specifically disclosed have the group RCO- derived from benzoic acid, p-toluic acid and p-tert. butyl benzoic acid.
These known compounds, however, are not sufficiently effective and have not found commercial application.

Instead, present day industry standards comprise products like Duomeen T and Duomeen HT, which are N-tallow and N-hydrogenated tallow propylene diamine respectively, and Haftmittel F4HB, which is the stearic acid amide of N',N'-dimethyl propylene diamine.

An important requirement for adhesion aids in bitumen and road oil is their heat stability. This is particularly so when the treated binder is stored for any length of time before use, or when high temperatures are reached during the coating of the aggregates with binder as in the hot-mixing process.
A further requirement is that the adhesion aids be effective at relatively low dosages. Yet another factor of importance relating to handling and proportioning is the physical form of the adhesion aid.

In one or more of the above aspects the industry standards of today are not fully satisfactory.
The purpose of the present invention is to provide better adhesion aids and these have been found in the type of compounds as identified in claim 1.

The adhesion aids according to the invention find utility in mainly three areas of technical application. These areas are generally known as road-oiling, hot-mixing and surface-dressing.
In road-oiling heavy fuel oil is mixed with crushed gravel and the resulting mix is spread on road surfaces to protect them from frost damage. Adhesion agents are added to improve te resistance of the coating to water ingress.
Hot-mixing involves mixing hot liquid bitumen or cut-back bitumen with aggregate. Mixing temperatures are generally in the range 100-200°C depending on the softening point of the bitumen used. The product can be used in road repair or construction and adhesion agents are usually added to improve the bond between bitumen and aggregate.
As a road repair method surface-dressing involves spraying cut-back bitumen or bitumen/tar mixture onto an old road surface and then sprinkling aggregate chippings on top before rolling in. Adhesion agents reduce the amount of loose unbound chippings, especially in wet weather.

In these and related areas of application the adhesion aids of the invention have the advantage of exhibiting better heat stability, even after prolonged storage in hot bitumen or road oil, than the present day industry standards.
Alternatively or additionally they have a better effectiveness at low dosages. The level of addition to the bitumen and oil is normally in the 0,1 to 2 wt.% range.

Generally, the amide derivatives of the invention can be made from acids derived from vegetable oils and animal fats such as olein, tallow, tall oil, palm kernel oil, castor oil etc. Very effective products are prepared from saturated or unsaturated, straight-chain fatty acids with chain lengths in the $C_{16}$-$C_{20}$ range, like stearic acid, oleic acid, palmitic acid, linoleic acid, ricinolic acid and hydroxystearic acid.
The oleic acid and stearic or hydrogenated tallow acid amides are preferred because of their physical form, the first being a liquid and the second a good flakeable hard solid.

The preparation of the amides of the invention can be done by usual methods of amide formation and does not present any particular problem. An obvious and useful method is to react N-aminoethyl piperazine with the selected acid producing the amide and water. One can also react with the acid chloride and produce the amine and hydrogen chloride as products.

The following examples illustrate the usefulness of the present amides as adhesion aids in different applications.

Example I

A number of adhesion aids were tested at different addition levels in a road-oiling application.

The adhesion aid under test was dissolved in road oil (ex. Norsk Fina) at 80°C and then stored at 120°C for the specified time.

To 100 g of dry crushed gravel aggregate (+ 10 mm ex. Sanvik, Norway) was added 0,5 g of distilled water and mixed at room temperature. Then 5 g of treated binder at 85°C was added and stirred with a spatula for 2 minutes. The mix was transferred to a 500 ml glass jar, covered with 150 ml water and allowed to stand at 40°C for 24 hours.

The percent of aggregate surface remaining coated with road oil was estimated visually and the test results obtained are presented in Table 1.

Table 1

| adhesion aid | level % | % coverage of aggregate after storage of treated binder for | |
|---|---|---|---|
| | | 2 h at 120°C | 8 days at 120°C |
| untreated | - | < 10 | < 10 |
| Duomeen HT | 0,2 | 20 | < 10 |
| | 0,4 | 50 | 40 |
| | 0,6 | 80 | 40 |
| | 0,8 | 95 | 50 |
| Oleic acid amide* | 0,2 | 10 | 10 |
| | 0,4 | 90 | 50 |
| | 0,6 | 95 | 90 |
| | 0,8 | 100 | 100 |
| tall acids amide** | 0,2 | 50 | 50 |
| | 0,4 | 50 | 50 |
| | 0,6 | 95 | 80 |
| | 0,8 | 95 | 100 |

* acid source: commercially pure oleic acid Priolene 6900

** acid source: Vantal AC (ex British Oxygen Chemicals), comprising mixed oleic, linoleic, rosin acids and minor amounts of other acids derived from tall oil.

Alternative source: Unitol AC (ex Union Camp Chemical Comp.)

Example II

The adhesion agent under test in a hot-mix application was dissolved in 180/220 pen bitumen (ex Lanstar) at 85°C and stored in sealed containers according to the conditions indicated in Table 2.

After storage 6 g of treated bitumen was mixed with 100 g of crushed gravel (5/10 mm) at 150°C for 2 minutes in a metal dish. The mix was transferred into a 500 ml glass jar and, when cool, covered with 150 ml distilled water and stored for 24 hours at 60°C.

The percent of the aggregate surface remaining covered was estimated visually and the results are presented in Table 2.

Table 2

| adhesion aid | level % | % coverage of aggregate after storage of treated binder for | | |
|---|---|---|---|---|
| | | 3 d room temp. | 3 d at 120°C | 3 d at 180°C |
| untreated | - | 20 | 20 | 40 |
| Duomeen T | 0,7 | 75 | 70 | 45 |
| Haftmittel F4HB | 0,7 | 50 | 75 | 60 |
| stearic acid amide* | 0,7 | 85 | 90 | 75 |

* acid source : hydrogenated tallow acid, Distec A 129 (ex Akzo Chemie U.K. Ltd.)

Examples III

For testing in a surface-dressing application the adhesion agent was dissolved in 200 pen bitumen cut-back with 5% white spirit at 85°C and then stored in closed containers for periods indicated in Table 3.
After storage the treated binder was poured into shallow trays, allowed to cool, then covered with water at 20°C. Individual diorite chippings (10/12 mm) were pushed through the water and into the surface of the bitumen and left 15 minutes. The chippings were carefully removed from the binder and the percent coverage of the face which had been in contact with the binder estimated visually. The results presented in Table 3 are an average of 20 chippings.

Table 3

| adhesion aid | level % | % coverage of aggregate after storage of treated binder for | |
|---|---|---|---|
| | | 1 hour at 120°C | 3 days at 120°C |
| untreated | - | 10 | 10 |
| Duomeen T | 1,0 | 100 | 33 |
| oleic acid amide | 1,0 | 100 | 85 |

0113492
ACI 1899

## CLAIMS

1. Adhesion aid for bitumen and road oil comprising an amide derivative of N-aminoethyl piperazine of the general formula

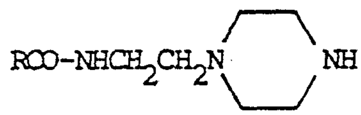

characterized in that RCO- is derived from a saturated or unsaturated, straight or branched, aliphatic carboxylic acid having 8 to 22 carbon atoms.

2. Adhesion aid according to claim 1, characterized in that R-CO- is derived from an acid having 16 to 20 carbon atoms.

3. Adhesion aid according to claim 2, characterized in that the acid is hydrogenated tallow acid.

4. Adhesion aid according to claim 2, characterized in that the acid is oleic acid.

0113492

Application number

European Patent Office

# EUROPEAN SEARCH REPORT

EP 83 30 0099

## DOCUMENTS CONSIDERED TO BE RELEVANT

| Category | Citation of document with indication, where appropriate, of relevant passages | Relevant to claim | CLASSIFICATION OF THE APPLICATION (Int Cl 3) |
|---|---|---|---|
| | | | C 08 L 95/00 |
| Y | FR-A-2 341 623 (FIRMA TH. GOLDSCHMIDT)<br>* Page 27, claim *<br>--- | 1 | C 08 K 5/34 |
| Y | US-A-3 114 649 (JACOB KATZ)<br>* Column 1, lines 9-23; column 1, lines 46-54; column 2, example 3 *<br>----- | 1,2 | |
| | | | TECHNICAL FIELDS SEARCHED (Int. Cl. 3) |
| | | | C 08 L |

The present search report has been drawn up for all claims

| Place of search | Date of completion of the search | Examiner |
|---|---|---|
| THE HAGUE | 18-08-1983 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document